# FASCICULE DE BREVET EUROPEEN

(11) **EP 2 618 975 B1**
(45) Date de publication et mention de la délivrance du brevet: **14.05.2014**
(21) Numéro de dépôt: 11757333.7
(22) Date de dépôt: 16.09.2011
(51) Int. Cl.: B29B 15/08, B29D 30/38

(54) **RENFORT COMPOSITE ET SON PROCEDE DE FABRICATION**
VERBUNDVERSTÄRKUNG UND HERSTELLUNGSVERFAHREN DAFÜR
COMPOSITE REINFORCEMENT AND MANUFACTURING PROCESS THEREFOR

(30) Priorité: 23.09.2010 FR 1057664
(43) Date de publication de la demande: 31.07.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: ABAD, Vincent, F-63040 Clermont-Ferrand Cedex 9 (FR); RIGO, Sébastien, F-63040 Clermont-Ferrand Cedex 9 (FR); CUSTODERO, Emmanuel, F-63040 Clermont-Ferrand Cedex 9 (FR)
(74) Mandataire: Ribière, Joel
(86) Numéro de dépôt international: PCT/EP2011/066112
(87) Numéro de publication internationale: WO 2012/038340

(56) Documents cités:
- EP-A2- 0 902 046
- WO-A1-2011/012521
- US-A- 4 754 794
- US-A1- 2008 206 449
- DATABASE WPI Week 199745 Thomson Scientific, London, GB; AN 1997-486547 XP002633571, & JP 9 227760 A (MITSUBISHI CHEM CORP) 2 septembre 1997 (1997-09-02)

## Description

### DOMAINE DE L'INVENTION

Le domaine de la présente invention est celui des éléments de renforcement ou « renforts », notamment métalliques, utilisables pour renforcer des articles ou produits semi-finis en caoutchouc diène tels que par exemple des bandages pneumatiques.

La présente invention est plus particulièrement relative à des renforts de type hybride ou composite constitués d'au moins une âme, en particulier métallique, ladite âme étant gainée ou recouverte d'une ou plusieurs couches de polymère.

### ETAT DE LA TECHNIQUE

Le gainage de renforts métalliques par des polymères thermoplastiques tels que par exemple polyamide ou polyester est connu depuis fort longtemps, notamment afin de protéger ces renforts contre diverses agressions externes tels qu'oxydation ou abrasion, ou encore en vue de rigidifier structurellement, solidariser entre eux divers ensembles de fils ou assemblages de fils tels que des câbles, et ainsi augmenter notamment leur résistance au flambage.

De tels renforts composites, ainsi que leur utilisation dans des articles en caoutchouc tels que des bandages pneumatiques, ont été décrits dans de nombreux documents brevet.

La demande de brevet EP 0 962 562 a décrit par exemple un renfort en acier ou en textile aramide gainé par une matière thermoplastique telle que polyester ou polyamide, en vue d'améliorer sa résistance à l'abrasion.

La demande de brevet FR 2 601 293 a décrit le gainage d'un câble métallique avec du polyamide pour l'utiliser comme tringle dans un bourrelet de bandage pneumatique, ce gainage permettant avantageusement d'adapter la forme de cette tringle à la structure et aux conditions de fonctionnement du bourrelet du bandage pneumatique qu'elle renforce.

Les documents brevet FR 2 576 247 ou US 4 754 794 ont également décrit des fils ou câbles métalliques utilisables comme tringle dans un bourrelet de bandage pneumatique, ces fils ou câbles étant doublement voire triplement gainés par deux, respectivement trois matières thermoplastiques différentes (e.g. polyamides) ayant des températures de fusion différentes, en vue d'une part de contrôler la distance entre ces fils ou câbles, d'autre part de supprimer les risques d'usure par frottement ou de corrosion, pour les utiliser comme tringle dans un bourrelet de bandage pneumatique.

Ces renforts ainsi gainés de matière polyester ou polyamide présentent, outre les avantages précités de résistance à la corrosion, de résistance à l'abrasion et de rigidité structurelle, celui non négligeable de pouvoir être ensuite collés à des matrices de caoutchouc diénique en utilisant de simples colles textiles dites "RFL" (résorcinol-formaldéhyde-latex) comportant au moins un élastomère diénique tel que du caoutchouc naturel, colles qui de manière connue confèrent une adhésion satisfaisante entre des fibres textiles tels que fibres en polyester ou polyamide et un caoutchouc diénique.

Ainsi, peuvent être utilisés avantageusement des renforts métalliques non revêtus de couches métalliques adhésives tels que laiton, ainsi que des matrices de caoutchouc environnantes dépourvues de sels métalliques tels que sels de cobalt, nécessaires de manière connue au maintien des performances adhésives au cours du temps mais augmentant significativement d'une part le coût des matrices de caoutchouc elles-mêmes, d'autre part leur sensibilité à l'oxydation et au vieillissement (voir par exemple demande WO 2005/113666).

Toutefois, les colles RFL ci-dessus ne sont pas dépourvues d'inconvénient ; elles comportent en particulier comme substance de base le formaldéhyde (ou formol) qu'il est souhaitable de supprimer à terme des compositions adhésives, en raison de l'évolution récente de la réglementation européenne sur ce type de produit.

Ainsi, les concepteurs d'articles en caoutchouc diénique, notamment les manufacturiers de bandages pneumatiques sont à la recherche aujourd'hui de nouveaux systèmes adhésifs ou de nouveaux renforts qui permettent de pallier tout ou partie des inconvénients précités.

### BREVE DESCRIPTION DE L'INVENTION

Or, au cours de leurs recherches, les Demanderesses ont découvert un renfort composite nouveau qui permet de répondre à l'objectif ci-dessus.

En conséquence, un premier objet de l'invention concerne un renfort composite comportant :
- un ou plusieurs fil(s) de renforcement ;
- recouvrant ledit fil, individuellement chaque fil ou collectivement plusieurs fils, une première couche d'un polymère thermoplastique dont la température de transition vitreuse est positive ;
- recouvrant la première couche, une deuxième couche d'une composition comportant au moins un poly(p-phénylène éther) (en abrégé "PPE") et un élastomère diénique fonctionnalisé porteur de groupes fonctionnels choisis parmi les groupes époxyde, carboxyle, anhydride ou ester d'acide.

On a constaté de manière inattendue que la présence de cette deuxième couche permettait d'assurer une adhésion directe (c'est-à-dire sans colle RFL ni tout autre adhésif) et performante du renfort composite de l'invention à une matrice ou composition d'élastomère diénique telle que celles couramment utilisées dans des bandages pneumatiques.

En outre et de manière tout aussi inattendue, les propriétés d'adhésion sont très notablement améliorées par rapport à l'emploi d'une colle textile RFL conventionnelle.

L'invention concerne également un procédé de fabrication du renfort composite ci-dessus, ledit procédé comportant au moins les étapes suivantes :
- on recouvre individuellement le fil ou chaque fil de renforcement, ou collectivement plusieurs fils de renforcement, par une première couche du polymère thermoplastique dont la température de transition vitreuse est positive ;
- on dépose sur la première couche une deuxième couche de la composition comportant le poly(p-phénylène éther) et l'élastomère diénique fonctionnalisé porteur de groupes fonctionnels choisis parmi les groupes époxyde, carboxyle, anhydride ou ester d'acide ;
- on soumet l'ensemble à un traitement thermo-oxydant.

La présente invention concerne également l'utilisation du renfort composite de l'invention comme élément de renforcement d'articles ou produits semi-finis en caoutchouc, particulièrement de bandages pneumatiques, notamment ceux destinés à équiper des véhicules à moteur de type tourisme, SUV ("*Sport Utility Vehicles*"), deux roues (notamment vélos, motos), avions, comme des véhicules industriels choisis parmi camionnettes, "poids-lourd" - c'est-à-dire métro, bus, engins de transport routier (camions, tracteurs, remorques), véhicules hors-la-route tels qu'engins agricoles ou de génie civil -, autres véhicules de transport ou de manutention.

L'invention concerne également en soi tout article ou produit semi-fini en caoutchouc, en particulier bandage pneumatique, comportant un renfort composite selon l'invention.

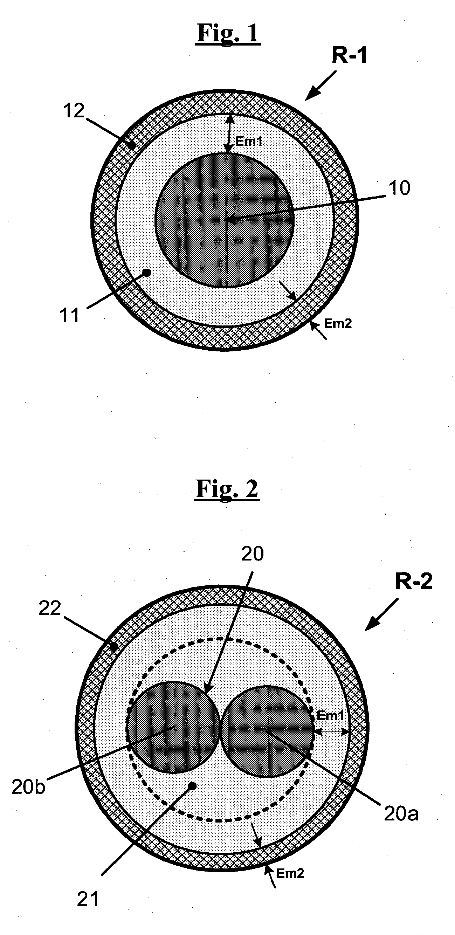

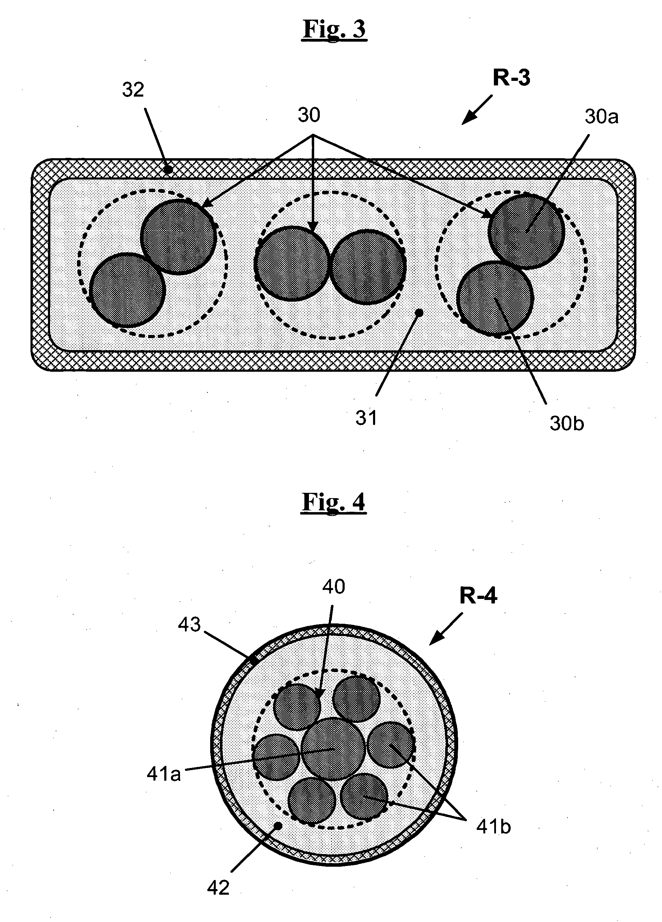

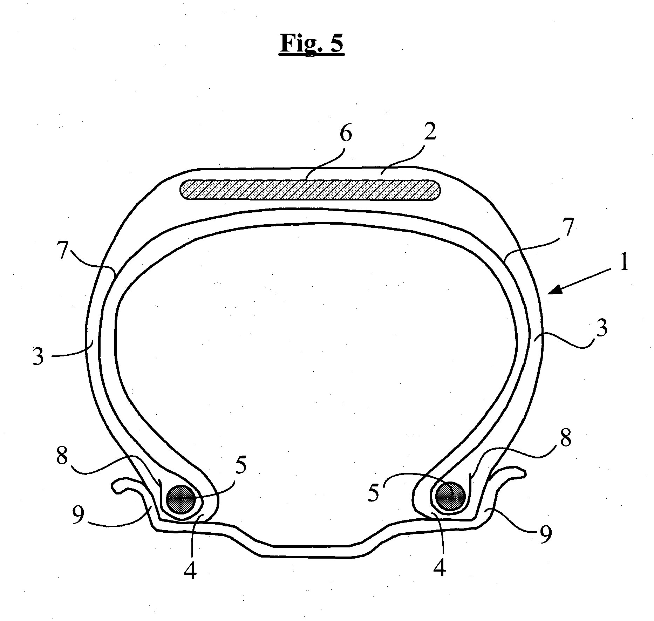

L'invention ainsi que ses avantages seront aisément compris à la lumière de la description et des exemples de réalisation qui suivent, ainsi que des figures relatives à ces exemples qui schématisent :
- en coupe transversale, un exemple d'un renfort composite selon l'invention (Fig. 1) ;
- en coupe transversale, un autre exemple d'un renfort conforme à l'invention (Fig. 2) ;
- en coupe transversale, un autre exemple d'un renfort conforme à l'invention (Fig. 3) ;
- en coupe transversale, un autre exemple d'un renfort conforme à l'invention (Fig. 4) ;
- en coupe radiale, un bandage pneumatique à armature de carcasse radiale conforme à l'invention, incorporant un renfort composite selon l'invention (Fig. 5).

### DESCRIPTION DETAILLEE DE L'INVENTION

Dans la présente description, sauf indication expresse différente, tous les pourcentages (%) indiqués sont des % en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b).

Le renfort composite de l'invention, susceptible d'adhérer directement par cuisson à une composition de caoutchouc insaturé et utilisable notamment pour le renforcement d'articles en caoutchouc diène tels que des bandages pneumatiques, a donc pour caractéristiques essentielles de comporter :
- au moins un fil (c'est-à-dire un ou plusieurs fils) de renforcement ;
- recouvrant individuellement ledit fil, chaque fil ou collectivement plusieurs fils, une première couche d'un polymère thermoplastique dont la température de transition vitreuse est positive (c'est-à-dire supérieure à 0°C) ;
- recouvrant ladite première couche, une deuxième couche d'une composition comportant au moins d'une part un poly(p-phénylène éther) (PPE) et d'autre part un élastomère diénique fonctionnalisé porteur de groupes fonctionnels choisis parmi les groupes époxyde, carboxyle, anhydride ou ester d'acide.

En d'autres termes, le renfort composite de l'invention comporte un seul fil ou plusieurs fils de renforcement, chaque fil de renforcement étant recouvert (à titre individuel ou collectivement) par deux couches de polymère distinctes et superposées, au contact l'une de l'autre. La structure du renfort de l'invention est décrite en détail ci-après.

Dans la présente demande, on entend de manière générale par fil de renforcement ("*reinforcing thread*") tout élément longiligne de grande longueur relativement à sa section transversale, quelle que soit la forme de cette dernière, par exemple circulaire, oblongue, rectangulaire ou carrée, ou même plate, ce fil pouvant être rectiligne comme non rectiligne, par exemple torsadé, ou ondulé.

Ce fil de renforcement peut prendre tout forme connue, il peut s'agir par exemple d'un monofilament élémentaire de diamètre important (par exemple et de préférence égal ou supérieur à 50 µm), d'un ruban élémentaire, d'une fibre multifilamentaire (constituée d'une pluralité de filaments élémentaires de faible diamètre, typiquement inférieur à 30 µm), d'un retors textile formé de plusieurs fibres retordues ensemble, d'un câble textile ou métallique formé de plusieurs fibres ou monofilaments câblés ou retordus ensemble, ou encore d'un assemblage, une rangée de fils tels que par exemple une bande ou bandelette comportant plusieurs de ces monofilaments, fibres, retors ou câbles regroupés ensemble, par exemple alignés selon une direction principale, rectiligne ou pas.

Le fil ou chaque fil de renforcement a un diamètre qui est préférentiellement inférieur à 5 mm, notamment compris dans un domaine de 0,1 à 2 mm.

De préférence, le fil de renforcement est un fil de renforcement métallique, notamment en acier au carbone tel que ceux utilisés dans les câbles type "*steel cord*" pour pneumatiques ; mais il est bien entendu possible d'utiliser d'autres aciers, par exemple des aciers inoxydables. Lorsqu'un acier au carbone est utilisé, sa teneur en carbone est de préférence comprise entre 0,4% et 1,2%, notamment entre 0,5% et 1,1%. L'invention s'applique en particulier à tout acier du type *steel cord* à résistance standard (dit "NT" pour "*Normal Tensile* "), à haute résistance (dit "HT" pour "*High Tensile* "), à très haute résistance (dit "SHT" pour "*Super High Tensile* ") comme à ultra-haute résistance (dit "UHT" pour "*Ultra High Tensile*").

Plus préférentiellement, le fil de renforcement métallique est sous forme d'un câble comportant au moins deux (c'est-à-dire deux ou plus) monofilaments métalliques assemblés entre eux, plus particulièrement en acier au carbone.

L'acier pourrait être revêtu d'une couche adhésive telle que du laiton ou du zinc. Toutefois, on peut avantageusement utiliser un acier clair, c'est-à-dire non revêtu. En outre, grâce à l'invention, la composition de caoutchouc destinée à être renforcée par un renfort métallique selon l'invention ne nécessite plus l'emploi dans sa formulation de sels métalliques tels que des sels de cobalt.

La première couche ou gaine recouvrant le ou chaque fil de renforcement est constituée par un polymère thermoplastique dont la température de transition vitreuse (Tg) est par définition positive, de préférence supérieure à +20°C, plus préférentiellement supérieure à +30°C. D'autre part, la température de fusion (notée Tf) de ce polymère thermoplastique est préférentiellement supérieure à 100°C, plus préférentiellement supérieure à 150°C, notamment supérieure à 200°C, fonction notamment de la nature (en particulier textile ou métallique) du matériau constitutif du fil de renforcement.

Ce polymère thermoplastique est choisi préférentiellement dans le groupe constitué par les polyamides, les polyesters et les polyimides, plus particulièrement dans le groupe constitué par les polyamides aliphatiques et les polyesters. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides aliphatiques, on peut citer notamment les polyamides 4-6, 6, 6-6, 11 ou 12. Ce polymère thermoplastique est préférentiellement un polyamide aliphatique, plus préférentiellement un polyamide 6-6 (ou Nylon^{®} 6-6).

La deuxième couche recouvrant la première couche, et donc au contact direct de cette dernière, est constituée d'une composition de polymère comportant, en combinaison avec l'élastomère diénique décrit en détail ultérieurement, au moins un polymère de poly(p-phénylène éther) ou poly(1,4-phénylène éther) (en abrégé PPE).

Les polymères thermoplastiques PPE sont bien connus de l'homme du métier, ce sont des résines solides à température ambiante (20°C). Préférentiellement, le PPE utilisé ici possède une température de transition vitreuse qui est supérieure à 150°C, plus préférentiellement supérieure à 180°C. Quant à sa masse moléculaire moyenne en nombre (Mn), elle est préférentiellement comprise entre 5 000 et 100 000 g/mol.

La masse moléculaire moyenne en nombre (Mn) est déterminée de manière connue, par chromatographie d'exclusion stérique (SEC). L'échantillon est préalablement solubilisé dans du tétrahydrofuranne à une concentration d'environ 1 g/l ; puis la solution est filtrée sur filtre de porosité 0,45 µm avant injection. L'appareillage utilisé est une chaîne chromatographique "WATERS alliance". Le solvant d'élution est le tétrahydrofuranne, le débit de 0,7 ml/min, la température du système de 35°C et la durée d'analyse de 90 min. On utilise un jeu de quatre colonnes WATERS en série, de dénominations commerciales "STYRAGEL" ("HMW7", "HMW6E" et deux "HT6E"). Le volume injecté de la solution de l'échantillon de polymère est de 100 µl. Le détecteur est un réfractomètre différentiel "WATERS 2410" et son logiciel associé d'exploitation des données chromatographiques est le système "WATERS MILLENIUM". Les masses molaires moyennes calculées sont relatives à une courbe d'étalonnage réalisée avec des étalons de polystyrène.

La Tg des polymères thermoplastiques et des élastomères diéniques décrits dans la présente demande est mesurée de manière connue par DSC (*Differential Scanning Calorimetry*), par exemple et sauf indications différentes spécifiées dans la présente demande, selon la norme ASTM D3418 de 1999.

A titres d'exemples non limitatifs de polymères PPE utilisables dans le renfort composite de l'invention, on peut citer notamment ceux choisis dans le groupe constitué par les poly(2,6-diméthyl-1,4-phénylène-éther), poly(2,6-diméthyl-co-2,3,6-triméthyl-1,4-phénylène-éther), poly-(2,3,6-triméthyl-1,4-phénylène-éther), poly(2,6-diéthyl-1,4-phénylène-éther), poly(2-méthyl-6-éthyl-1,4-phénylène-éther), poly(2-méthyl-6-propyl-1,4-phénylène-éther), poly-(2,6-dipropyl-1,4-phénylène-éther), poly(2-éthyl-6-propyl-1,4-phénylène-éther), poly(2,6-dilauryl-1,4-phénylène-éther), poly(2,6-diphényl-1,4-phénylène-éther), poly(2,6-diméthoxy-1,4-phénylène-éther), poly(1,6-diéthoxy-1,4-phénylène-éther), poly(2-méthoxy-6-éthoxy-1,4-phénylène-éther), poly(2-éthyl-6-stéaryloxy-1,4-phénylène-éther), poly(2,6-dichloro-1,4-phénylène-éther), poly(2-méthyl-6-phényl-1,4-phénylène-éther), poly(2-éthoxy-1,4-phénylène-éther), poly(2-chloro-1,4-phénylène-éther), poly(2,6-dibromo-1,4-phénylène-éther), poly(3-bromo-2,6-diméthyl-1,4-phénylène-éther), leurs copolymères respectifs, et les mélanges de ces homopolymères ou copolymères.

Selon un mode de réalisation particulier et préférentiel, le PPE utilisé est le poly(2,6-diméthyl-1,4-phénylène-éther) également dénommé parfois polyphénylène oxyde (ou, en abrégé, "PPO"). De tels PPE ou PPO commercialement disponibles sont par exemple les PPE de dénomination "Xyron S202" de la société Asahi Kasei, ou les PPE de dénomination "Noryl SA120" de la société Sabic.

De préférence, dans la composition formant la deuxième couche du renfort composite de l'invention, la quantité de polymère PPE est ajustée de telle manière que le taux pondéral de PPE soit compris entre 0,02 et 2 fois, plus préférentiellement entre 0,10 et 1 fois le taux pondéral d'élastomère diénique fonctionnalisé. En dessous des minima préconisés, l'adhésion du renfort composite au caoutchouc peut être diminuée alors qu'au-delà des maxima indiqués, il existe un risque de fragilité de la deuxième couche.

La composition polymérique de la deuxième couche comporte d'autre part un élastomère diénique fonctionnalisé, ledit élastomère étant porteur de groupes fonctionnels choisis parmi les groupes ou fonctions époxyde, carboxyle, anhydride ou ester d'acide. Préférentiellement, les groupes fonctionnels sont des groupes époxydes, c'est-à-dire que l'élastomère diénique est un élastomère diénique époxydé.

Par élastomère ou caoutchouc (les deux termes étant de manière connue synonymes et interchangeables) du type "diénique", on rappelle que doit être entendu un élastomère qui est issu au moins en partie (i.e. un homopolymère ou un copolymère) de monomères diènes (monomères porteurs de deux doubles liaisons carbone-carbone, conjuguées ou non).

Ces élastomères diéniques, non thermoplastiques par définition dans la présente demande, présentant une Tg dans la très grande majorité des cas qui est négative (c'est-à-dire inférieure à 0°C), peuvent être classés de manière connue en deux catégories : ceux dits "essentiellement insaturés" et ceux dits "essentiellement saturés". Les caoutchoucs butyl, comme par exemple les copolymères de diènes et d'alpha-oléfines type EPDM, entrent dans la catégorie des élastomères diéniques essentiellement saturés, ayant un taux de motifs d'origine diénique qui est faible ou très faible, toujours inférieur à 15% (% en moles). A contrario, par élastomère diénique essentiellement insaturé, on entend un élastomère diénique issu au moins en partie de monomères diènes conjugués, ayant un taux de motifs ou unités d'origine diénique (diènes conjugués) qui est supérieur à 15% (% en moles). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

On préfère utiliser au moins un élastomère diénique du type fortement insaturé, en particulier un élastomère diénique choisi dans le groupe constitué par le caoutchouc naturel (NR), les polyisoprènes de synthèse (IR), les polybutadiènes (BR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Les élastomères diéniques ci-dessus peuvent être par exemple à blocs, statistiques, séquencés, microséquencés, et être préparés en dispersion ou en solution.

A titre préférentiel conviennent les polybutadiènes et en particulier ceux ayant une teneur en unités -1,2 comprise entre 4% et 80% ou ceux ayant une teneur en cis-1,4 supérieure à 80%, les polyisoprènes, les copolymères de butadiène-styrène et en particulier ceux ayant une teneur en styrène comprise entre 5% et 50% en poids et plus particulièrement entre 20% et 40%, une teneur en liaisons -1,2 de la partie butadiénique comprise entre 4% et 65% , une teneur en liaisons trans-1,4 comprise entre 20% et 80%, les copolymères de butadiène-isoprène et notamment ceux ayant une teneur en isoprène comprise entre 5% et 90% en poids et une température de transition vitreuse de -40°C à -80°C, les copolymères isoprène-styrène et notamment ceux ayant une teneur en styrène comprise entre 5% et 50% en poids et une Tg comprise entre -25°C et -50°C.

Dans le cas des copolymères de butadiène-styrène-isoprène conviennent notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur en unités -1,2 de la partie butadiénique comprise entre 4% et 85%, une teneur en unités trans -1,4 de la partie butadiénique comprise entre 6% et 80%, une teneur en unités -1,2 plus -3,4 de la partie isoprénique comprise entre 5% et 70% et une teneur en unités trans -1,4 de la partie isoprénique comprise entre 10% et 50%, et plus généralement tout copolymère butadiène-styrène-isoprène ayant une Tg comprise entre -20°C et -70°C.

Plus préférentiellement encore, est utilisé un copolymère SBR.

Une deuxième caractéristique essentielle de l'élastomère diénique utilisé dans le renfort composite de l'invention est qu'il est fonctionnalisé, porteur de groupes fonctionnels choisis parmi les groupes ou fonctions époxyde, carboxyle, anhydride ou ester d'acide.

De tels élastomères diéniques fonctionnalisés et leurs procédés d'obtention sont bien connus de l'homme du métier et disponibles commercialement. Des élastomères diéniques porteurs de groupes carboxyle ont été décrits par exemple dans WO 01/92402 ou US 6815473, WO 2004/096865 ou US 7312264 ; des élastomères diéniques porteurs de groupes époxyde ont été décrits par exemple dans US 2003/120007 ou EP 0763564, US 6903165 ou EP 1403287.

Préférentiellement, les groupes fonctionnels sont des groupes époxydes c'est-à-dire que l'élastomère diénique est un élastomère diénique époxydé. Plus préférentiellement encore, l'élastomère diénique époxydé est choisi dans le groupe constitué par les caoutchoucs naturels (NR) époxydés, les polyisoprènes (IR) de synthèse époxydés, les polybutadiènes (BR) époxydés ayant préférentiellement un taux de liaisons cis-1,4 supérieur à 90%, les copolymères de butadiène-styrène (SBR) époxydés et les mélanges de ces élastomères.

Les caoutchoucs naturels époxydés (en abrégé "ENR"), par exemple, peuvent être obtenus de manière connue par époxydation du caoutchouc naturel, par exemple par des procédés à base de chlorohydrine ou de bromohydrine ou des procédés à base de peroxydes d'hydrogène, d'alkyl hydroperoxydes ou de peracides (tel que acide peracétique ou acide performique) ; de tels ENR sont par exemple vendus sous les dénominations "ENR-25" et "ENR-50" (taux d'époxydation respectifs de 25% et 50%) par la société Guthrie Polymer. Les BR époxydés sont eux aussi bien connus, vendus par exemple par la société Sartomer sous la dénomination "Poly Bd" (par exemple "Poly Bd 605E"). Les SBR époxydés peuvent être aussi préparés par des techniques d'époxydation bien connues de l'homme du métier.

Plus préférentiellement encore, est utilisé un copolymère SBR époxydé.

Le taux (% molaire) de fonctionnalisation, notamment d'époxydation, des élastomères diéniques fonctionnalisés précédemment décrits peut varier dans une large part selon les modes de réalisation particuliers de l'invention, de préférence dans un domaine de 5% à 60%. Quand le taux d'époxydation est inférieur à 5%, l'effet technique visé risque d'être insuffisant tandis qu'au-delà de 60%, la masse moléculaire du polymère diminue fortement. Pour toutes ces raisons, le taux de fonctionnalisation, notamment d'époxydation, est plus préférentiellement compris dans un domaine de 10% à 50%.

Les élastomères diéniques époxydés précédemment décrits sont de manière connue solides à température ambiante (20°C) ; on entend par solide toute substance n'ayant pas la capacité de prendre à terme, au plus tard au bout de 24 heures, sous le seul effet de la gravité et à température ambiante (20°C), la forme du récipient qui la contient.

Par opposition notamment à des élastomères du type liquides, ces élastomères solides se caractérisent par une viscosité très élevée : leur viscosité Mooney à l'état cru (i.e., non réticulé), notée ML (1+4), mesurée à 100°C, est de préférence supérieure à 20, plus préférentiellement supérieure à 30, en particulier comprise entre 30 et 130. On utilise pour cette mesure un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (par exemple 100°C). Après 1 minute de préchauffage, le rotor tourne au sein de l'éprouvette à 2 tours/minute et on mesure le couple utile pour entretenir ce mouvement après 4 minutes de rotation. La viscosité Mooney (ML 1+4) est exprimée en "unité Mooney" (UM, avec 1 UM=0,83 Newton.mètre). On rappellera aussi que ces élastomères solides se caractérisent de manière connue par une masse moléculaire élevée, typiquement nettement supérieure à leur masse entre enchevêtrements.

La deuxième couche ou composition polymère décrite ci-dessus peut comporter par ailleurs divers additifs, à des taux préférentiels inférieurs à 30%, plus préférentiellement à 20%, encore plus préférentiellement inférieur à 10% en poids par rapport à la quantité de PPE. De tels additifs pourraient être par exemple des élastomères ou polymères autres que ceux précédemment décrits, l'addition de ces élastomères ou polymères étant par exemple destinée à moduler les propriétés de rigidité de la deuxième couche afin notamment de réduire les gradients de rigidité pouvant exister entre les première et deuxième couches. De tels additifs pourraient être également des charges renforçantes telles que du noir de carbone ou de la silice, des charges non renforçantes ou inertes, des agents colorants utilisables pour la coloration de la composition, des plastifiants tels que des huiles, des agents de protection tels que antioxydants, antiozonants, anti-UV ou autres stabilisants.
La figure 1 annexée représente de manière très schématique (sans respect d'une échelle spécifique), en coupe transversale, un premier exemple d'un renfort composite conforme à l'invention. Ce renfort composite noté R-1 est constitué d'un fil de renforcement (10) constitué d'un filament unitaire ou monofilament de diamètre relativement élevé (par exemple entre 0,10 et 0,50 mm), par exemple en acier au carbone, qui est recouvert d'une première couche (11) d'un polymère thermoplastique dont la Tg est positive, par exemple en polyamide ou en polyester, dont l'épaisseur minimale est notée Eₘ₁ sur cette figure 1. Une deuxième couche (12) d'une composition comportant un PPE et un élastomère diénique fonctionnalisé, par exemple un BR, SBR ou NR du type époxydé, vient recouvrir la première couche (11) ; son épaisseur minimale est notée Eₘ₂ sur la figure 1.
La figure 2 schématise en coupe transversale un deuxième exemple d'un renfort composite conforme à l'invention. Ce renfort composite noté R-2 est constitué d'un fil de renforcement (20) constitué en fait de deux filaments unitaires ou monofilaments (20a, 20b) de diamètre relativement élevé (par exemple entre 0,10 et 0,50 mm) retordus ou câblés ensemble, par exemple en acier au carbone ; le fil de renforcement (20) est recouvert d'une première couche (21) d'un polymère thermoplastique dont la Tg est positive, par exemple en polyamide 6-6 ou en polyester, d'épaisseur minimale Eₘ₁. Une deuxième couche (22) d'une composition comportant un PPE et un élastomère diénique fonctionnalisé, par exemple un BR, SBR ou NR époxydé, d'épaisseur minimale Eₘ₂, vient recouvrir la première couche (21).
La figure 3 schématise en coupe transversale un autre exemple de renfort composite selon l'invention. Ce renfort composite noté R-3 est constitué de trois fils de renforcement (30) constitués chacun de deux monofilaments (30a, 30b) de diamètre relativement élevé (par exemple entre 0,10 et 0,50 mm) retordus ou câblés ensemble, par exemple en acier au carbone ; l'ensemble constitué par les trois fils de renforcement (30) par exemple alignés est recouvert d'une première couche (31) d'un polymère thermoplastique dont la Tg est positive, par exemple en polyamide ou en polyester. Une deuxième couche (32) d'une composition comportant un PPE et un élastomère diénique fonctionnalisé, par exemple un BR, SBR ou NR époxydé, vient recouvrir la première couche (31).
La figure 4 schématise, toujours en coupe transversale, un autre exemple de renfort composite selon l'invention. Ce renfort composite R-4 comporte un fil de renforcement (40) consistant en un câble d'acier de construction 1+6, avec un fil central ou fil d'âme (41a) et six filaments (41b) de même diamètre enroulés ensemble en hélice autour du fil central. Ce câble ou fil de renforcement (40) est recouvert d'une première couche (42) d'un polyamide 6-6, elle-même recouverte d'une deuxième couche (43) d'une composition comportant un PPE et un élastomère diénique fonctionnalisé, par exemple un BR, SBR ou NR époxydé.

Dans les renforts composites conformes à l'invention tels que ceux schématisés par exemple dans les figures 1 à 4 ci-dessus, l'épaisseur minimale des deux couches (Eₘ₁ et Eₘ₂) peut varier dans une très large mesure en fonction des conditions particulières de réalisation de l'invention.

L'épaisseur minimale Eₘ₁ de la première couche est de préférence comprise entre 1 µm et 2 mm, plus préférentiellement entre 10 µm et 1 mm.

Selon un mode de réalisation particulier de l'invention, l'épaisseur minimale Eₘ₂ de la deuxième couche peut être du même ordre de grandeur que celle de la première couche (cas d'une deuxième couche épaisse d'une épaisseur comprise par exemple entre 1 µm et 2 mm, en particulier entre 10 µm et 1 mm), ou bien être notablement différente.

Selon un autre mode de réalisation particulier de l'invention, la deuxième couche pourrait constituer par exemple une couche adhésive fine ou ultrafine, déposée par exemple par une technique d'enduction, par pulvérisation, ou autre technique de dépôt de film mince ou ultramince, par exemple d'épaisseur comprise dans un domaine de 0,02 µm à 10 µm, en particulier entre 0,05 µm et 0,5 µm.

Dans le cas où plusieurs fils de renforcement sont utilisés dans le renfort composite de l'invention, les première et deuxième couches peuvent être déposées individuellement sur chacun des fils de renforcement (pour rappel, que ces fils de renforcement soit unitaires ou pas), comme illustré par exemple aux figures 1, 2 et 4 commentées précédemment. Mais les première et deuxième couches peuvent être aussi déposées collectivement sur plusieurs des fils de renforcement disposés de manière appropriée, par exemple alignés selon une direction principale, comme illustré par exemple à la figure 3.

Le renfort composite de l'invention est susceptible d'être préparé selon un procédé spécifique comportant au moins les étapes suivantes :
- au cours d'une première étape, on soumet tout d'abord au moins un (c'est-à-dire un ou plusieurs) fil de renforcement à un premier recouvrement par la première couche de polymère thermoplastique dont la température de transition vitreuse est positive ;
- puis, au cours d'une deuxième étape, on dépose sur la première couche une deuxième couche de là composition comportant le PPE et l'élastomère diénique fonctionnalisé ;
- enfin, on soumet l'ensemble à un traitement thermo-oxydant.

Les deux premières étapes peuvent être conduites de manière connue de l'homme du métier, en ligne et en continu, ou pas ; elles consistent par exemple à faire passer le fil ou chaque fil de renforcement (pris individuellement ou collectivement), à travers des filières de diamètre adapté, dans une ou plusieurs têtes d'extrusion chauffées à des températures appropriées, ou encore, ce qui constitue un mode de réalisation plus préférentiel, dans un bain d'enduction contenant le PPE et l'élastomère diénique fonctionnalisé mis préalablement (ensemble ou séparément) en solution dans un solvant (ou un mélange de solvants) organique approprié.

Selon un mode de réalisation particulier et préférentiel, le fil ou chaque fil de renforcement (pris individuellement ou collectivement) est préalablement chauffé, par exemple par induction ou par rayonnement IR, avant passage dans la tête d'extrusion délivrant le polymère thermoplastique ; en sortie de la tête d'extrusion, le fil ou chaque fil de renforcement ainsi gainé est ensuite refroidi suffisamment de manière à solidifier la couche de polymère, par exemple avec de l'air ou un autre gaz froid, ou par passage dans un bain d'eau suivi d'une étape de séchage ; le ou chaque fil de renforcement ainsi gainé et refroidi est ensuite recouvert par la composition de PPE et d'élastomère diénique fonctionnalisé, par passage à travers un bain d'enduction de dimensions appropriées.

L'étape suivante consiste en un traitement thermo-oxydant destiné à solidariser au mieux les deux couches. Par traitement "thermo-oxydant" on entend par définition un traitement thermique en présence d'oxygène, par exemple de l'oxygène de l'air. Une telle étape permet d'obtenir une adhésion optimale de la deuxième couche à la première couche de polymère thermoplastique ; par exemple, un traitement thermique sous vide s'est avéré insuffisant. La température utilisée pour ce traitement thermique est préférentiellement comprise entre 150°C et 300°C, pour une durée de traitement plus préférentiellement comprise entre 20 s et 600 s.

A titre d'exemple, le recouvrement d'un fil de renforcement de diamètre proche de 0,6 mm, par exemple d'un câble métallique constitué simplement de deux monofils élémentaires de diamètre 0,3 mm torsadés ensemble (comme illustré par exemple à la figure 2), par une première couche de polyamide 6-6 d'épaisseur maximale égale à environ 0,4 mm, pour l'obtention d'un fil de renforcement gainé ayant un diamètre total d'environ 1 mm, est réalisé sur une ligne d'extrusion-gainage comportant deux filières, une première filière (contre-filière ou filière amont) de diamètre égal à environ 0,7 mm et une seconde filière (ou filière aval) de diamètre égal à environ 1 mm, disposées toutes deux dans une tête d'extrusion portée à environ 300°C. Le polyamide, fondu à une température de 290°C dans l'extrudeuse, recouvre ainsi le fil de renforcement, par le biais de la tête de gainage, à une vitesse de défilement du fil égale typiquement à plusieurs dizaines de m/min, pour un débit de pompe d'extrusion typiquement de plusieurs dizaines de cm³/min. En sortie de ce premier gainage, le fil peut être immergé dans un bac de refroidissement rempli d'eau froide, pour solidifier et figer le polyamide dans son état amorphe, puis séché par exemple par passage de la bobine de réception à l'étuve.

Pour la première étape de gainage décrite ci-dessus, le câble (fil de renforcement) est avantageusement préchauffé avant passage dans la tête d'extrusion, par exemple par passage à travers un générateur HF ou à travers un tunnel chauffant.

Le fil ainsi recouvert de polyamide est ensuite recouvert de la composition de PPE et d'élastomère diénique fonctionnalisé selon un mode de réalisation adapté à l'épaisseur visée pour la deuxième couche.

A titre d' exemple, dans le cas où l'épaisseur visée de la deuxième couche est très nettement inférieure à celle de la première couche, par exemple égale à quelques dizaines de nanomètres, le fil recouvert de polyamide passe, par exemple à une vitesse de quelques m/min ou dizaines de m/min et sur une longueur de quelques cm ou dizaines de cm, entre deux feutrines de laine pressées par une masse de 1 kg et imbibées en continu par le PPE et l'élastomère diénique fonctionnalisé (par exemple BR, SBR ou NR époxydé) dilués dans un solvant approprié (par exemple à 5% dans du toluène), afin de recouvrir ainsi le tout d'une couche ultra-fine de la composition de PPE et d'élastomère diénique fonctionnalisé.

A l'issue de la seconde opération, par exemple en sortie du bain d'enduction précédemment décrit, le fil composite traverse un four-tunnel, par exemple de plusieurs mètres de long, pour y subir un traitement thermique sous air. Cette température de traitement est par exemple comprise entre 150°C et 300°C, pour des durées de traitement de quelques secondes à quelques minutes selon les cas, étant entendu que la durée du traitement sera d'autant plus courte que la température sera élevée, et que le traitement thermique ne doit évidemment pas conduire à une refusion ou même un ramollissement excessif des matières polymériques utilisées.

Ainsi terminé, le renfort composite de l'invention est avantageusement refroidi, par exemple à l'air, pour éviter d'éventuels problèmes de collage parasite lors de son enroulement sur la bobine de réception finale.

L'homme du métier saura ajuster la température et la durée du traitement thermique en fonction des conditions particulières de mise en oeuvre de l'invention, notamment de la nature exacte du renfort composite fabriqué, notamment selon que l'on traite des monofilaments pris individuellement, des câbles constitués de plusieurs monofilaments ou des groupes de tels monofilaments ou câbles tels que des bandelettes.

En particulier, l'homme du métier aura avantage à réaliser des balayages en température et durée de traitement, de manière à rechercher, par approches successives, les conditions opératoires conduisant aux meilleurs résultats d'adhésion, pour chaque mode de réalisation particulier de l'invention.

Les étapes du procédé de l'invention précédemment décrites peuvent être éventuellement complétées par un traitement final de réticulation tridimensionnelle du renfort, plus exactement de sa seconde couche de PPE et d'élastomère diénique fonctionnalisé, pour renforcer encore sa propre cohésion. Cette réticulation pourra être conduite par tout moyen connu, par exemple par des moyens de réticulation physiques tels que bombardement ionique ou électronique, ou par des moyens de réticulation chimiques.

Une réticulation pourra être également obtenue lors de la cuisson des bandages pneumatiques (ou plus généralement des articles en caoutchouc) que le renfort composite de l'invention est destiné à renforcer, grâce au propre système de réticulation présent dans les compositions de caoutchouc diénique constitutives de tels bandages (ou articles) et entrant au contact du renfort composite de l'invention.

Le renfort composite de l'invention est utilisable directement, c'est-à-dire sans nécessiter un quelconque système adhésif supplémentaire, comme élément de renforcement d'une matrice de caoutchouc diène, par exemple dans un bandage pneumatique. Il est avantageusement utilisable pour le renforcement de bandages pneumatiques de tous types de véhicules, en particulier véhicules tourisme ou véhicules industriels tels que poids-lourd.

A titre d'exemple, la figure 5 annexée représente de manière très schématique (sans respect d'une échelle spécifique), une coupe radiale d'un bandage pneumatique conforme à l'invention pour véhicule du type tourisme.

Ce bandage pneumatique 1 comporte un sommet 2 renforcé par une armature de sommet ou ceinture 6, deux flancs 3 et deux bourrelets 4, chacun de ces bourrelets 4 étant renforcé avec une tringle 5. Le sommet 2 est surmonté d'une bande de roulement non représentée sur cette figure schématique. Une armature de carcasse 7 est enroulée autour des deux tringles 5 dans chaque bourrelet 4, le retournement 8 de cette armature 7 étant par exemple disposé vers l'extérieur du pneumatique 1 qui est ici représenté monté sur sa jante 9. L'armature de carcasse 7 est de manière connue en soi constituée d'au moins une nappe renforcée par des câbles dits "radiaux", par exemple textiles ou métalliques, c'est-à-dire que ces câbles sont disposés pratiquement parallèles les uns aux autres et s'étendent d'un bourrelet à l'autre de manière à former un angle compris entre 80° et 90° avec le plan circonférentiel médian (plan perpendiculaire à l'axe de rotation du pneumatique qui est situé à mi-distance des deux bourrelets 4 et passe par le milieu de l'armature de sommet 6).

Ce bandage pneumatique 1 de l'invention a par exemple pour caractéristique essentielle qu'au moins une de ses armatures de sommet ou de carcasse comporte un renfort composite selon l'invention. Selon un autre exemple de mode de réalisation possible de l'invention, ce sont les tringles 5 qui pourraient être constituées d'un renfort composite selon l'invention.

### EXEMPLES DE REALISATION DE L'INVENTION

### Essai 1 - Fabrication des renforts composites

On fabrique tout d'abord des renforts composites, conformes ou non à l'invention, de la manière suivante. Le fil de renforcement de départ est un câble d'acier (dit "*steel cord*") pour bandages pneumatiques (acier standard à 0,7% en poids de carbone), de construction 1x2 constitué de deux fils élémentaires ou monofils de diamètre 0,30 mm retordus ensemble selon un pas d'hélice de 10 mm. Son diamètre est de 0,6 mm.

Le recouvrement de ce câble par du polyamide 6-6 ("ZYTEL E40 NC010" de la société DuPont de Nemours ; température de fusion Tf égale à environ 260°C) est réalisé sur une ligne d'extrusion-gainage par passage à travers une tête d'extrusion portée à une température de 300°C et comportant deux filières, une filière amont de diamètre 0,63 mm et une filière aval de diamètre 0,92 mm. Le polyamide porté à une température égale à environ 290°C dans l'extrudeuse (débit de pompe de 20 cm³/min) recouvre ainsi le fil de renforcement (préchauffé à environ 280-290°C par passage à travers un générateur HF) défilant à une vitesse de 30 m/min. En sortie de la tête de gainage, le renfort composite obtenu est immergé en continu dans un bac de refroidissement rempli d'eau à 5°C pour figer le polyamide dans son état amorphe, puis séché par une buse d'air.

A ce stade de la fabrication, on obtient un renfort composite témoin (donc non conforme à l'invention) constitué du câble d'acier de départ gainé uniquement de sa première couche de polyamide. Ce renfort composite témoin (noté R-5) a un diamètre total (i.e., une fois gainé) d'environ 1,0 mm.

Puis, au cours d'une deuxième étape, on dépose sur le câble ainsi gainé une deuxième couche d'une composition comportant un mélange (rapport pondéral 1/0,4) d'un élastomère diénique époxydé et de PPE ("Xyron S202" de la société Asahi Kasei) dont l'épaisseur minimale (Eₘ₂) visée est égale à quelques dizaines de nanomètres, de la manière qui suit. Le câble recouvert de polyamide 6-6 est passé à travers un bain d'enduction, à une vitesse d'environ 3 m/min, sur une longueur d'environ 15 cm, entre deux feutrines de laine pressées par une masse de 1 kg et imbibées en continu par le mélange de l'élastomère diénique époxydé et de PPE, dilué à 5% en poids dans du toluène, afin de recouvrir ainsi le tout d'une couche ultra-fine de la composition de PPE et d'élastomère. Le renfort ainsi gainé est ensuite séché pour éliminer le solvant par évaporation.

Les températures de transition vitreuse des deux polymères thermoplastiques utilisés ci-dessus (polyamide 6-6 et PPE) sont respectivement égales à environ + 50°C et + 215°C (mesurées par exemple selon le mode opératoire qui suit : appareil DSC "822-2" de Mettler Toledo ; atmosphère Hélium ; échantillons préalablement portés de la température ambiante (20°C) à 100°C (20°C/min), puis refroidis rapidement jusqu'à -140°C, avant enregistrement final de la courbe de DSC de -140°C à +300°C à 20°C/min).

A l'issue de ce deuxième gainage, on soumet l'ensemble (renfort composite doublement gainé) à un traitement thermo-oxydant d'une durée d'environ 100 s, par passage à 3 m/min dans un four-tunnel, sous atmosphère ambiante, porté à une température de 270°C. A ce stade final de la fabrication, on obtient un renfort composite conforme à l'invention, constitué du câble d'acier de départ gainé de sa première couche de polyamide et de sa deuxième couche de PPE et d'élastomère diénique époxydé. Le renfort composite conforme à l'invention ainsi préparé (renfort R-2 tel que schématisé à la figure 2) a un diamètre final total d'environ 1 mm.

Dans cet essai, pour déterminer les meilleures conditions opératoires du traitement thermo-oxydant, on a réalisé préalablement un balayage en température de 160°C à 280°C, pour quatre durées de traitement (50 s, 100 s, 200 s et 400 s).

Au cours de ces essais de fabrication, deux élastomères diéniques époxydés différents ont été utilisés, à savoir un polybutadiène (BR) époxydé (« Epolead » PB3600 de la société Daicel Chemical Industries ; taux d'époxydation égal à environ 28% (mol)) et un SBR époxydé (taux d'époxydation égal à environ 15% (mol) ; Tg égale à -35°C ; 27% de styrène, 42% de liaisons 1,4 et 16% de liaisons 1,2).

### Essai 2 - Tests d'adhésion

La qualité de la liaison entre le caoutchouc et les renforts composites précédemment fabriqués est ensuite appréciée par un test dans lequel on mesure la force nécessaire pour extraire les renforts d'une composition de caoutchouc vulcanisée, dit encore vulcanisat. Cette composition de caoutchouc est une composition conventionnelle utilisée pour le calandrage de nappes métalliques de ceinture de pneumatique, à base de caoutchouc naturel, de noir de carbone et des additifs usuels.

Le vulcanisat est un bloc de caoutchouc constitué de deux plaques de dimensions 200 mm par 4,5 mm et d'épaisseur 3,5 mm, appliquées l'une sur l'autre avant cuisson (l'épaisseur du bloc résultant est alors de 7 mm). C'est lors de la confection de ce bloc que les renforts composites (15 brins au total) sont emprisonnés entre les deux plaques de caoutchouc à l'état cru, à égale distance et en laissant dépasser de part et d'autre de ces plaques une extrémité de renfort composite de longueur suffisante pour la traction ultérieure. Le bloc comportant les renforts est alors placé dans un moule adapté puis cuit sous pression. La température et la durée de cuisson sont adaptées aux conditions de tests visées et laissées à l'initiative de l'homme de l'art ; à titre d'exemple, dans le cas présent, la cuisson du bloc est réalisée à 160°C pendant 15 min, sous une pression de 16 bars.

A l'issue de la cuisson, l'éprouvette ainsi constituée du bloc vulcanisé et des 15 renforts est mise en place dans les mâchoires d'une machine de traction adaptée pour permettre de tractionner chaque renfort isolément hors du caoutchouc, à une vitesse et une température données (par exemple, dans le cas présent, à 50 mm/min et 20°C). On caractérise les niveaux d'adhésion en mesurant la force dite d'arrachage (notée Fₘₐₓ) pour arracher les renforts de l'éprouvette (moyenne sur 15 tractions).

On a constaté que les renforts composites de l'invention, malgré le fait qu'ils soient dépourvus de colle RFL (ou toute autre colle), présentaient une force d'arrachage Fₘₐₓ particulièrement élevée et inattendue, toujours supérieure à la force d'arrachage de référence mesurée sur le renfort composite témoin gainé de nylon (R-5) et encollé avec une colle conventionnelle RFL : à la température ambiante (25°C) et pour une base relative égale à 100 sur le renfort composite témoin R-5, les renforts composites de l'invention, avec une seconde couche en PPE et respectivement BR ou SBR époxydés, présentaient une force d'arrachage Fₘₐₓ augmentée de 25% (BR époxydé) et de 150% (SBR époxydé) comparativement au renfort composite témoin R-5.

Dans les mêmes conditions, le renfort composite témoin (R-5) gainé de nylon mais dépourvu de colle RFL (ou toute autre colle), présentait une adhésion nulle au caoutchouc (force d'arrachage égale pratiquement à zéro).

En conséquence, le renfort composite de l'invention par son caractère auto-adhérent constitue une alternative particulièrement intéressante, compte tenu des très hauts niveaux d'adhésion obtenus, aux renforts composites de l'art antérieur gainés par une matière thermoplastique telle que polyamide ou polyester, nécessitant de manière connue l'emploi d'une colle du type RFL pour assurer leur adhésion au caoutchouc.

## Revendications

1. Renfort composite comportant :
- un ou plusieurs fil(s) de renforcement
- recouvrant ledit fil, individuellement chaque fil ou collectivement plusieurs fils, une première couche d'un polymère thermoplastique dont la température de transition vitreuse est positive
**caractérisé en ce qu'**il comporte en outre;
- recouvrant la première couche, une deuxième couche d'une composition comportant un poly(p-phénylène éther) ("PPE") et un élastomère diénique fonctionnalisé porteur de groupes fonctionnels choisis parmi les groupes époxyde, carboxyle, anhydride ou ester d'acide.

2. Renfort selon la revendication 1, dans lequel la température de transition vitreuse du polymère thermoplastique est supérieure à +20°C.

3. Renfort selon l'une quelconque des revendications 1 ou 2, dans lequel le polymère thermoplastique est un polyamide aliphatique ou un polyester, le polymère thermoplastique étant de préférence un polyamide 6-6.

4. Renfort selon l'une quelconque des revendications 1 à 3, dans lequel le PPE a une température de transition vitreuse supérieure à 150°C, de préférence supérieure à 180°C.

5. Renfort selon l'une quelconque des revendications 1 à 4, dans lequel le PPE est le poly(2,6-diméthyl-l,4-phénylène-éther).

6. Renfort selon l'une quelconque des revendications 1 à 5, dans lequel l'élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

7. Renfort selon l'une quelconque des revendications 1 à 6, dans lequel l'élastomère diénique est un élastomère diénique époxydé.

8. Renfort selon la revendication 7, dans lequel l'élastomère diénique est un caoutchouc naturel ou un polyisoprène de synthèse.

9. Renfort selon la revendication 7, dans lequel l'élastomère diénique est un polybutadiène ou un copolymère de butadiène-styrène, de préférence un copolymère de butadiène-styrène.

10. Renfort selon l'une quelconque des revendications 1 à 9, dans lequel l'épaisseur minimale de la première couche est comprise entre 1 µm et 2 mm et l'épaisseur minimale de la deuxième couche est de préférence comprise dans un domaine de 0,02 µm à 10 µm.

11. Renfort selon l'une quelconque des revendications 1 à 10, dans lequel le fil de renforcement est métallique, de préférence sous forme d'un câble.

12. Article ou produit semi-fini en caoutchouc comportant un renfort composite selon l'une quelconque des revendications 1 à 11.

13. Bandage pneumatique comportant un renfort composite selon l'une quelconque des revendications 1 à 11.

14. Procédé de fabrication d'un renfort composite selon l'une quelconque des revendications 1 à 11, **caractérisé en ce qu'**il comporte au moins les étapes suivantes :
- on recouvre individuellement le fil ou chaque fil de renforcement, ou collectivement plusieurs fils de renforcement, par une première couche du polymère thermoplastique dont la température de transition vitreuse est positive ;
- on dépose sur la première couche une deuxième couche d'une composition comportant le poly(p-phénylène éther) ("PPE") et l'élastomère diénique fonctionnalisé porteur de groupes fonctionnels choisis parmi les groupes époxyde, carboxyle, anhydride ou ester d'acide ;
- on soumet l'ensemble à un traitement thermo-oxydant.

15. Procédé selon la revendication 14, comportant en outre une étape de réticulation du renfort composite.

## Patentansprüche

1. Verbundverstärkung, umfassend:
- einen oder mehrere Verstärkungsfäden;
- eine den Faden, jeden Faden einzeln bzw. mehrere Fäden zusammen bedeckende erste Schicht aus einem thermoplastischen Polymer, dessen Glasübergangstemperatur positiv ist, **dadurch gekennzeichnet, dass** sie außerdem
- eine die erste Schicht bedeckende zweite Schicht aus einer Zusammensetzung, die einen Poly(p-phenylenether) ("PPE") und ein Dienelastomer, das aus Epoxid-, Carboxyl-, Anhydrid- oder Säureestergruppen ausgewählte funktionelle Gruppen trägt, umfasst,
umfasst.

2. Verstärkung nach Anspruch 1, wobei die Glasübergangstemperatur des thermoplastischen Polymers größer als +20°C ist.

3. Verstärkung nach Anspruch 1 oder 2, wobei es sich bei dem thermoplastischen Polymer um ein aliphatisches Polyamid oder einen Polyester, vorzugsweise ein Polyamid-6,6, handelt.

4. Verstärkung nach einem der Ansprüche 1 bis 3, wobei der PPE eine Glasübergangstemperatur von mehr als 150°C und vorzugsweise mehr als 180°C aufweist.

5. Verstärkung nach einem der Ansprüche 1 bis 4, wobei es sich bei dem PPE um Poly(2,6-dimethyl-1,4-phenylenether) handelt.

6. Verstärkung nach einem der Ansprüche 1 bis 5, wobei das Dienelastomer aus der Gruppe bestehend aus Naturkautschuk, synthetischen Polyisoprenen, Polybutadienen, Butadien-Copolymeren, Isopren-Copolymeren und Mischungen dieser Elastomere ausgewählt ist.

7. Verstärkung nach einem der Ansprüche 1 bis 6, wobei es sich bei dem Dienelastomer um ein epoxidiertes Dienelastomer handelt.

8. Verstärkung nach Anspruch 7, wobei es sich bei dem Dienelastomer um einen Naturkautschuk oder ein synthetisches Polyisopren handelt.

9. Verstärkung nach Anspruch 7, wobei es sich bei dem Dienelastomer um ein Polybutadien oder ein Butadien-Styrol-Copolymer, vorzugsweise ein Butadien-Styrol-Copolymer, handelt.

10. Verstärkung nach einem der Ansprüche 1 bis 9, wobei die Minimaldicke der ersten Schicht zwischen 1 µm und 2 mm liegt und die Minimaldicke der zweiten Schicht vorzugsweise in einem Bereich von 0,02 µm bis 10 µm liegt.

11. Verstärkung nach einem der Ansprüche 1 bis 10, wobei der Verstärkungsfaden aus Metall ist, vorzugsweise in Form eines Kabels.

12. Artikel oder Halbzeug aus Kautschuk, umfassend eine Verbundverstärkung nach einem der Ansprüche 1 bis 11.

13. Luftreifen, umfassend eine Verbundverstärkung nach einem der Ansprüche 1 bis 11

14. Verfahren zur Herstellung einer Verbundverstärkung nach einem der Ansprüche 1 bis 11, **dadurch gekennzeichnet, dass** es mindestens die folgenden Schritte umfasst:
- man bedeckt den Verstärkungsfaden bzw. jeden Verstärkungsfaden einzeln oder mehrere Verstärkungsfäden zusammen mit einer ersten Schicht aus thermoplastischem Polymer, dessen Glasübergangstemperatur positiv ist;
- man scheidet auf der ersten Schicht eine zweite Schicht aus einer Zusammensetzung, die den Poly(p-phenylenether) ("PPE") und das Dienelastomer, das aus Epoxid-, Carboxyl-, Anhydrid- oder Säureestergruppen ausgewählte funktionelle Gruppen trägt, umfasst, ab;
- man unterwirft das Ganze einer thermooxidativen Behandlung.

15. Verfahren nach Anspruch 14, das außerdem einen Schritt der Vernetzung der Verbundverstärkung umfasst.

## Claims

1. Composite reinforcer comprising:
- one or more reinforcing thread(s);
- a first layer of a thermoplastic polymer, the glass transition temperature of which is positive, covering said thread, individually each thread or collectively several threads,
**characterized in that** it also comprises
- a second layer of a composition comprising a poly(*p*-phenylene ether) ("PPE") and a functionalized diene elastomer bearing functional groups selected from epoxide, carboxyl, acid anhydride and acid ester groups, covering the first layer.

2. Reinforcer according to Claim 1, wherein the glass transition temperature of the thermoplastic polymer is greater than +20°C.

3. Reinforcer according to either of Claims 1 and 2, wherein the thermoplastic polymer is an aliphatic polyamide or a polyester, the thermoplastic polymer being preferably a polyamide 6,6.

4. Reinforcer according to any one of Claims 1 to 3, wherein the PPE has a glass transition temperature greater than 150°C, preferably greater than 180°C.

5. Reinforcer according to any one of Claims 1 to 4, wherein the PPE is poly(2,6-dimethyl-1,4-phenylene ether).

6. Reinforcer according to any one of Claims 1 to 5, wherein the diene elastomer is selected from the group consisting of natural rubber, synthetic polyisoprenes, polybutadienes, butadiene copolymers, isoprene copolymers and mixtures of these elastomers.

7. Reinforcer according to any one of Claims 1 to 6, wherein the diene elastomer is an epoxidized diene elastomer.

8. Reinforcer according to Claim 7, wherein the diene elastomer is a natural rubber or a synthetic polyisoprene.

9. Reinforcer according to Claim 7, wherein the diene elastomer is a polybutadiene or a butadiene/styrene copolymer, preferably a styrene/butadiene copolymer.

10. Reinforcer according to any one of Claims 1 to 9, wherein the minimum thickness of the first layer is between 1 µm and 2 mm and the minimum thickness of the second layer preferably lies in the range from 0.02 µm to 10 µm

11. Reinforcer according to any one of Claims 1 to 10, wherein the reinforcing thread is a metal wire, preferably in the form of a cord.

12. Rubber article or semi-finished product comprising a composite reinforcer according to any one of Claims 1 to 11.

13. Pneumatic tyre comprising a composite reinforcer according to any one of Claims 1 to 11.

14. Process for manufacturing a composite reinforcer according to any one of Claims 1 to 11, **characterized in that** it comprises at least the following steps:
- individually the reinforcing thread or each reinforcing thread, or collectively several reinforcing threads, is/are covered by a first layer of the thermoplastic polymer having a positive glass transition temperature;
- a second layer of a composition comprising the poly(*p*-phenylene ether) ("PPE") and the functionalized diene elastomer bearing functional groups selected from epoxide, carboxyl, acid anhydride and acid ester groups, is deposited on the first layer; and
- the assembly undergoes a thermo-oxidative treatment.

15. Process according to Claim 14, which further includes a step of crosslinking the composite reinforcer.
